(19) Europäisches Patentamt / European Patent Office / Office européen des brevets

(11) **EP 2 255 629 A2**

(12) **EUROPÄISCHE PATENTANMELDUNG**

(43) Veröffentlichungstag:
**01.12.2010 Patentblatt 2010/48**

(21) Anmeldenummer: **10174036.3**

(22) Anmeldetag: **23.04.2005**

(51) Int Cl.:
***A01N 43/653*** *(2006.01)* ***A01N 43/90*** *(2006.01)*
***A01P 3/00*** *(2006.01)* ***A01N 43/32*** *(2006.01)*
***A01N 43/60*** *(2006.01)* ***A01N 47/34*** *(2006.01)*
*A01N 43/32 (2006.01)* *A01N 43/60 (2006.01)*
*A01N 47/34 (2006.01)*

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **18.05.2004 DE 102004025032**
**30.04.2004 DE 102004021766**

(62) Dokumentnummer(n) der früheren Anmeldung(en) nach Art. 76 EPÜ:
**05734026.7 / 1 744 629**

(71) Anmelder: **BASF SE**
**67056 Ludwigshafen (DE)**

(72) Erfinder:
- **Tormo i Blasco, Jordi**
  **69469 Weinheim (DE)**
- **Suarez-Cervieri, Miguel, Octavio**
  **08960 Barcelona (ES)**
- **Niedenbrück, Matthias**
  **67117 Limburgerhof (DE)**
- **Strathmann, Siegfried**
  **67117 Limburgerhof (DE)**
- **Stierl, Reinhard**
  **Kaohsiung County 83345 (TW)**
- **Scherer, Maria**
  **76829 Landau (DE)**
- **Grote, Thomas**
  **67157 Wachenheim (DE)**
- **Gewehr, Markus**
  **56288 Kastellaun (DE)**
- **Schöfl, Ulrich**
  **Apex, NC 27523 (US)**
- **Müller, Bernd**
  **67227 Frankenthal (DE)**

Bemerkungen:
Diese Anmeldung ist am 25-08-2010 als Teilanmeldung zu der unter INID-Code 62 erwähnten Anmeldung eingereicht worden.

(54) **Fungizide Mischungen**

(57) Fungizide Mischungen, enthaltend als aktive Komponenten
1) eine Sulfamoylverbindung der Formel I,

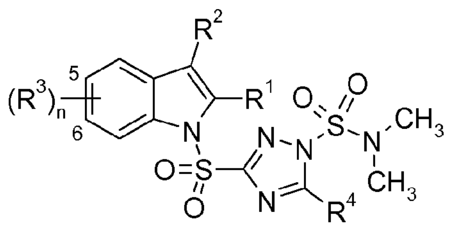

I

in der die Substituenten folgende Bedeutung haben:
$R^1$
Wasserstoff, Halogen, Cyano, Alkyl, Halogenalkyl, Alkoxy, Alkylthio, Alko- xycarbonyl, Phenyl, Benzyl, Formyl oder CH=NOA;

A
Wasserstoff, Alkyl, Alkylcarbonyl;

$R^2$
Wasserstoff, Halogen, Cyano, Alkyl, Halogenalkyl, Alkoxycarbonyl;
$R^3$

EP 2 255 629 A2

Halogen, Cyano, Nitro, Alkyl, Halogenalkyl, Alkoxy, Alkylthio, Alkoxycarbonyl, Formyl oder CH=NOA;
n
0, 1, 2, 3 oder 4;

$R^4$
Wasserstoff, Halogen, Cyano, Alkyl oder Halogenalkyl;

und
2) mindestens einen Wirkstoff ausgewählt aus der Gruppe I) Heterocylische Verbindungen; gemäß der Beschreibung; in einer synergistisch wirksamen Menge, Verfahren zur Bekämpfung von Schadpilzen mit Mischungen einer Verbindung I mit Wirkstoffen aus der Gruppe I) und die Verwendung der Verbindungen I mit Wirkstoffen aus den Gruppe I) zur Herstellung derartiger Mischungen sowie Mittel, die diese Mischungen enthalten.

**Beschreibung**

Die vorliegende Erfindung betrifft fungizide Mischungen, enthaltend als aktive Komponenten

1) eine Sulfamoylverbindung der Formel I,

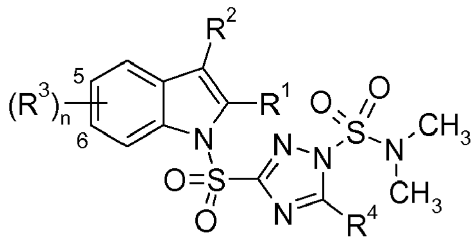

I

in der die Substituenten folgende Bedeutung haben:

$R^1$ Wasserstoff, Halogen, Cyano, $C_1$-$C_4$-Alkyl, $C_1$-$C_2$-Halogenalkyl, $C_1$-$C_4$-Alkoxy, $C_1$-$C_4$-Alkylthio, $C_1$-$C_4$-Alkoxycarbonyl, Phenyl, Benzyl, Formyl oder CH=NOA;
A Wasserstoff, $C_1$-$C_4$-Alkyl, $C_1$-$C_4$-Alkylcarbonyl;
$R^2$ Wasserstoff, Halogen, Cyano, $C_1$-$C_4$-Alkyl, $C_1$-$C_2$-Halogenalkyl, $C_1$-$C_6$-Alkoxycarbonyl;
$R^3$ Halogen, Cyano, Nitro, $C_1$-$C_4$-Alkyl, $C_1$-$C_2$-Halogenalkyl, $C_1$-$C_4$-Alkoxy, $C_1$-$C_4$-Alkylthio, $C_1$-$C_4$-Alkoxycarbonyl, Formyl oder CH=NOA;
n 0, 1, 2, 3 oder 4;
$R^4$ Wasserstoff, Halogen, Cyano, $C_1$-$C_4$-Alkyl oder $C_1$-$C_2$-Halogenalkyl;

und

2) mindestens einen Wirkstoff ausgewählt aus der Gruppe:

I) Heterocylische Verbindungen wie Benomyl, Boscalid, Carbendazim, Dithianon, Famoxadon, Fenamidon, Penthiopyrad, Picobenzamid, Proquinazid, Quinoxyfen, Thiophanat-methyl, Triforine oder
5-Chlor-7-(4-methyl-piperidin-1-yl)-6-(2,4,6-trifluor-phenyl)-[1,2,4]triazolo[1,5-a]pyrimidin der Formel II,

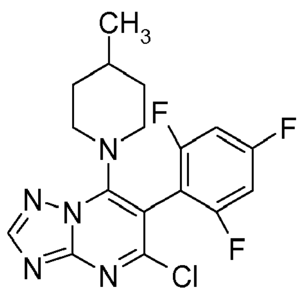

II

in einer synergistisch wirksamen Menge.

Außerdem betrifft die Erfindung ein Verfahren zur Bekämpfung von Schadpilzen mit Mischungen einer Verbindung I mit Wirkstoffen aus der Gruppe I) und die Verwendung der Verbindungen I mit Wirkstoffen aus der Gruppe I) zur Herstellung derartiger Mischungen sowie Mittel, die diese Mischungen enthalten.

Die als Komponente 1 voranstehend bezeichneten Sulfamoylverbindungen der Formel I, ihre Herstellung und deren Wirkung gegen Schadpilze sind aus der Literatur bekannt (EP-A 10 31 571, JP-A 2001-192 381).

Mischungen einer Sulfamoylverbindung der Formel I mit anderen Wirkstoffen sind in WO 03/053145 beschrieben.

Die genannten Wirkstoffe der Gruppen A) bis O), ihre Herstellung und ihre Wirkung gegen Schadpilze sind allgemein bekannt (vgl.: http://www.hclrss.demon.co.uk/index.html):

Cyproconazol, 2-(4-Chlor-phenyl)-3-cyclopropyl-1-[1,2,4]triazol-1-yl-butan-2-ol (US 4 664 696);
Difenoconazole, 1-{2-[2-Chlor-4-(4-chtor-phenoxy)-phenyl]-4-methyl-[1 ,3]dioxolan-2-ylmethyl}-1H-[1,2,4]triazol (GB-A 2 098 607);
Enilconazol (Imazalil), 1-[2-(2,4-Dichlorphenyl)-2-(2-propenyloxy)ethyl]-1H-imidazol (Fruits, 1973, Bd. 28, S. 545);
Epoxiconazol, (2RS,3SR)-1-[3-(2-Chlorphenyl)-2,3-epoxy-2-(4-fluorphenyl)propyl]-1H-1,2,4-triazol (EP-A 196 038);
Fluquiconazol, 3-(2,4-Dichlor-phenyl)-6-fluor-2-[1,2,4]-triazol-1-yl-3H-quinazolin-4-on (Proc. Br. Crop Prot. Conf.-Pests Dis., 5-3, 411 (1992));
Flusilazol, 1-{[Bis-(4-fluor-phenyl)-methyl-silanyl]-methyl}-1H-[1,2,4]triazol(Proc.Br. Crop Prot. Conf.-Pests Dis., 1, 413 (1984));
Hexaconazol, (RS)-2-(2,4-Dichlorphenyl)-1-(1H-1,2,4-triazol-1-yl)hexan-2-ol[CAS-RN 79983-71-4];
Metconazol, 5-(4-Chlor-benzyl)-2,2-dimethyl-1-[1,2,4]triazol-1-ylmethyl-cyclopentanol (GB 857 383);
Myclobutanil, 2-(4-Chlor-phenyl)-2-[1,2,4]triazol-1-ylmethyl-pentan-nitril [CAS RN 88671-89-0];
Penconazol, 1-[2-(2,4-Dichlor-phenyl)-pentyl]-1H- [1,2,4]triazol (Pesticide Manual, 12$^{th}$ Ed. (2000), S.712);
Prochloraz, Imidazol-1-carbonsäure-propyl-[2-(2,4,6-trichlor-phenoxy)-ethyl]-amid (US 3 991 071);
Prothioconazol, 2-[2-(1-Chlor-cyclopropyl)-3-(2-chlor-phenyl)-2-hydroxy-propyl]-2,4-dihydro-[1,2,4]triazol-3-thion (WO 96/16048);
Tebuconazol, 1-(4-Chlorphenyl)-4,4-dimethyl-3-[1,2,4]triazol-1-ylmethyl-pentan-3-ol (EP-A 40 345);
Triadimefon, 1-(4-Chlorphenoxy)-3,3-dimethyl-1-(1H-1,2,4-triazol-1-yl)-2-butanon (BE 793 867);
Triadimenol, β-(4-Chlorphenoxy)-α-(1,1-dimethylethyl)-1H-1,2,4-triazol-1-ethanol (DE 23 24 010);
Triflumizol, (4-Chlor-2-trifluormethyl-phenyl)-(2-propoxy-1-[1,2,4]triazol-1-yl-ethyliden)-amin (JP-A 79/119 462);
Azoxystrobin, 2-{2-[6-(2-Cyano-1-vinyl-penta-1,3-dienyloxy)-pyrimidin-4-l!oxy]-phenyl}-3-methoxy-acrylsäuremethylester (EP 382 375),
Dimoxystrobin, (E)-2-(methoxyimino)-N-methyl-2-[α-(2,5-xylyloxy)-o-tolyl]acetamid (EP 477 631);
Enestroburin, 2-{2-[3-(4-Chlorphenyl)-1-methyl-allylidenaminooxymethyl]-phenyl}-3-methoxy-acrylsäuremethylester (EP 936 213);
Fluoxastrobin, (E)-{2-[6-(2-chlorphenoxy)-5-fluorpyrimidin-4-yloxy]phenyl}(5,6-dihydro-1,4,2-dioxazin-3-yl)methanon-O-methyloxim (WO 97/27189);
Kresoxim-methyl, (E)-Methoxyimino[α-(o-tolyloxy)-o-tolyl]essigsäuremethylester (EP 253 213);
Metominostrobin, (E)-2-(Methoxyimino)-N-methyl-2-(2-phenoxyphenyl)acetamid (EP 398 692);
Orysastrobin, (2E)-2-(Methoxyimino)-2-{2-[(3E,5E,6E)-5-(methoxyimino)-4,6-dimethyl-2,8-dioxa-3,7-diazanona-3,6-dien-1-yl]phenyl}-N-methylacetamid (WO 97/15552);
Picoxystrobin, 3-Methoxy-2-[2-(6-trifluormethyl-pyridin-2-yloxymethyl)-phenyl]-acrylsäuremethylester (EP 278 595);
Pyraclostrobin, N-{2-[1-(4-Chlorphenyl)-1H-pyrazol-3-yloxymethyl]phenyl}(N-methoxy)carbaminsäuremethylester (WO 96/01256);
Trifloxystrobin, (E)-Methoxyimino-{(E)-a-[1-(a,a,a-trifluor-m-tolyl)ethylidenaminooxy]-o-tolyl}essigsäuremethylester (EP 460 575);
Benalaxyl, Methyl N-(phenylacetyl)-N-(2,6-xylyl)-DL-alaninat (DE 29 03 612), Metalaxyl-M (Mefenoxam), Methyl N-(methoxyacetyl)-N-(2,6-xylyl)-DL-alaninat (GB 15 00 581);
Ofurace, (RS)-α-(2-Chlor-N-2,6-xylylacetamido)-γ-butyrolacton [CAS RN 58810-48-3]; Oxadixyl; N-(2,6-Dimethylphenyl)-2-methoxy-N-(2-oxo-3-oxazolidinyl)acetamid (GB 20 58 059);
Spiroxamin, (8-tert-Butyl-1,4-dioxa-spiro[4.5]dec-2-yl)-diethyl-amin (EP-A 281 842); Pyrimethanil, 4,6-Dimethyl-pyrimidin-2-yl)-phenyl-amin (DD-A 151 404);
Mepanipyrim, (4-Methyl-6-prop-1-inyl-pyrimidin-2-yl)-phenyl-amin (EP-A 224 339); Cyprodinil, (4-Cyclopropyl-6-methyl-pyrimidin-2-yl)-phenyl-amin (EP-A 310 550); Iprodion, 3-(3,5-Dichlor-phenyl)-2,4-dioxo-imidazolidin-1-carbonsäureisopropylamid (GB 13 12 536);
Procymidon, N-(3,5-Dichlorphenyl)-1,2-dimethylcyclopropan-1,2-dicarboximid (US 3 903 090);
Vinclozolin, 3-(3,5-Dichlor-phenyl)-5-methyl-5-vinyl-oxazolidin-2,4-dion (DE-OS 22 07 576);
Dimethomorph, 3-(4-Chlorphenyl)-3-(3,4-dimethoxyphenyl)-1-morpholin-4-yl-propenon (EP 120 321);
Flumetover, 2-(3,4-Dimethoxyphenyl)-N-ethyl-α,α,α-trifluor-N-methyl-p-toluamid [AGROW Nr. 243, 22 (1995)];
Flumorph, 3-(4-Fluorphenyl)-3-(3,4-dimethoxyphenyl)-1-morpholin-4-yl-propenon (EP 860 438);
Ferbam, Eisen(3+)dimethyldithiocarbamat (US 1 972 961);
Nabam, Dinatrium Ethylenbis(dithiocarbamat) (US 2 317 765);
Maneb, Mangan-ethylenbis(dithiocarbamat) (US 2 504 404);
Metam, Methyldithiocarbaminsäure (US 2 791 605);
Metiram, Zinkammoniat-ethylenbis(dithiocarbamat) (US 3 248 400);
Propineb, Zink Propylenbis(dithiocarbamat) Polymer (BE 611 960);
Polycarbamat, Bis(dimethylcarbamodithioato-κS,κS')[μ-[[1,2-ethandiylbis[carbamodithioato-κS,κS']](2-)]]di[Zink] [CAS RN 64440-88-6];

Thiram, Bis(dimethylthiocarbamoyl)disulfid (DE 642 532);
Ziram, Dimethyldithiocarbamat [CAS RN 137-30-4];
Zineb, Zink-ethylenbis(dithiocarbamat) (US 2 457 674);
Benomyl, 2-Acetylamino-benzoimidazol-1-carbonsäurebutylamid (US 3 631 176); Boscalid, 2-Chlor-N-(4'-chlorbiphenyl-2-yl)nicotinamid (EP-A 545 099);
Carbendazim, (1H-Benzoimidazol-2-yl)-carbaminsäuremethylester (US 3 657 443); Dithianon, 5,10-Dioxo-5,10-dihydro-naphtho[2,3-b][1,4]dithiin-2,3-dicarbonitril (GB 857 383);
Famoxadon, (RS)-3-Anilino-5-methyl-5-(4-phenoxyphenyl)-1,3-oxazolidin-2,4-dion [CAS RN 131807-57-3];
Fenamidon, (S)-1-Anilino-4-methyl-2-methylthio-4-phenylimidazolin-5-on [CAS RN 161326-34-7];
Penthiopyrad, (RS)-N-[2-(1,3-Dimethylbutyl)-3-thienyl]-1-methyl-3-(trifluormethyl)-1H-pyrazol-4-carboxamid (JP 10130268);
Fluopicolide (Picobenzamid), 2,6-Dichlor-N-(3-chlor-5-trifluormethyl-pyridin-2-ylmethyl)-benzamid (WO 99/42447);
Proquinazid, 6-Jodo-2-propoxy-3-propylquinazolin-4(3H)-on (WO 97/48684); Quinoxyfen, 5,7-Dichlor-4-(4-fluorphenoxy)-chinolin (US 5 240 940); Thiophanat-methyl, 1,2-Phenylenbis(iminocarbonothioyl)bis(dimethylcarbamat) (DE-OS 19 30 540);
Triforine, N,N'-{Piperazine-1,4-diylbis[(trichlormethyl)methylen]}diformamid (DE 19 01 421); 5-Chlor-7-(4-methylpiperidin-1-yl)-6-(2,4,6-trifluor-phenyl)-[1,2,4]triazolo[1,5-a]pyrimidin (WO 98/46607);
Bordeaux Brühe, Mischung von $CuSO_4$ x $3Cu(OH)_2$ x $3CaSO_4$ [CAS RN 8011-63-0] Kupferacetat, $Cu(OCOCH_3)_2$ [CAS RN 8011-63-0];
Kupferoxychlorid, $Cu_2Cl(OH)_3$ [CAS RN 1332-40-7];
basisches Kupfersulfat, $CuSO_4$ [CAS RN 1344-73-6];
Dinocap, die Mischung aus 2,6-Dinitro-4-octylphenylcrotonat und 2,4-Dinitro-6-octylphenylcrotonat, wobei "Octyl" eine Mischung aus 1-Methylheptyl, 1-Ethylhexyl und 1-Propylpentyl bedeutet (US 2 526 660);
Fenpiclonil, 4-(2,3-Dichlor-phenyl)-1H-pyrrol-3-carbonitril (Proc. 1988 Br. Crop Prot. Conf. - Pests Dis., Bd. 1, S. 65);
Fludioxonil, 4-(2,2-Difluor-benzo[1,3]dioxol-4-yl)-1H-pyrrol-3-carbonitril (The Pecticide Manual, Hrsg. The British Crop Protection Council, 10. Aufl. (1995), S. 482);
Captafol, N-(1,1,2,2-Tetrachloroethylthio)cyclohex-4-en-1,2-dicarboximid (Phytopathology, Bd. 52, S.754 (1962));
Dichlofluanid, N-Dichlorfluormethylthio-N',N'-dimethyl-N-phenylsulfamid (DE 11 93 498);
Tolylfluanid, N-Dichlorfluormethylthio-N',N'-dimethyl-N-p-tolylsulfamid (DE 11 93 498);
Flubenthiavalicarb (Benthiavalicarb), {(S)-1-[(1R)-1-(6-Fluor-benzothiazol-2-yl)-ethylcarbamoyl]-2-methyl-propyl}-carbaminsäureisopropylester (JP-A 09/323 984);
Chlorothalonil, 2,4,5,6-Tetrachlor-isophthalonitril (US 3 290 353);
Cyflufenamid, (Z)-N-[α-(Cyclopropylmethoxyimino)-2,3-difluor-6-(trifluormethyl)benzyl]-2-phenylacetamid (WO 96/19442);
Diclofluanid, 1,1-Dichlor-N-[(dimethylamino)sulfonyl]-1-fluor-N-phenylmethansulfenamid [CAS-RN 1085-98-9];
Diethofencarb, Isopropyl 3,4-diethoxycarbanilat (EP 78 663);
Ethaboxam, N-(Cyano-2-thienylmethyl)-4-ethyl-2-(ethylamino)-5-thiazolcarboxamid (EP-A 639 574);
Fenhexamid, N-(2,3-dichlor-4-hydroxyphenyl)-1-methylcyclohexancarboxamid (Proc. Br. Crop Prot. Conf. - Pests Dis., 1998, Bd. 2, S. 327);
Fluazinam, 3-Chlor-N-[3-chlor-2,6-dinitro-4-(trifluoromethyl)phenyl]-5-(trifluormethyl)-2-pyridin-amin (The Pecticide Manual, Hrsg. The British Crop Protection Council, 10. Aufl. (1995), S. 474);
Iprovalicarb, [(1S)-2-Methyl-1-(1-p-tolyl-ethylcarbamoyl)-propyl]-carbaminsäure-isopropylester (EP-A 472 996);
Mandipropamid, (RS)-2-(4-Chlorphenyl)-N-[3-methoxy-4-(prop-2-inyloxy)phenethyl]-2-(prop-2-inyloxy)acetamid (vgl. WO 01/87822);
Metrafenon, 3'-Brom-2,3,4,6'-tetramethoxy-2',6-dimethylbenzophenon (US 5 945 567);
Zoxamid, (RS)-3,5-Dichlor-N-(3-chlor-1-ethyl-1-methyl-2-oxopropyl)-p-toluamid [CAS RN 156052-68-5];
Oximetherderivate der Formel III (WO 99/14188);
Verbindungen der Formel IV (WO 97/48648; WO 02/094797; WO 03/14103).

Im Hinblick auf eine Senkung der Aufwandmengen und eine Verbreiterung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilze zeigen.

Demgemäss wurden die eingangs definierten Mischungen gefunden. Es wurde außerdem gefunden, dass sich bei gleichzeitiger gemeinsamer oder getrennter Anwendung einer Verbindung I und eines Wirkstoffs aus der Gruppe I) oder bei Anwendung einer Verbindung I und eines Wirkstoffs aus der Gruppe I) nacheinander Schadpilze besser bekämpfen lassen als mit den Einzelverbindungen (synergistische Mischungen).

Die Mischungen einer Verbindung I und eines Wirkstoffs aus der Gruppe I), bzw. die gleichzeitige gemeinsame oder getrennte Verwendung einer Verbindung I und eines Wirkstoffs aus der Gruppe I) zeichnen sich aus durch eine

hervorragende Wirksamkeit gegen ein breites Spektrum von pflanzenpathogenen Pilzen, insbesondere aus der Klasse der Ascomyceten, Deuteromyceten, Oomyceten und Basidiomyceten. Sie sind zum Teil systemisch wirksam und können im Pflanzenschutz als Blatt-, Beiz- und Bodenfungizide eingesetzt werden.

Besondere Bedeutung haben sie für die Bekämpfung einer Vielzahl von Pilzen an verschiedenen Kulturpflanzen wie Bananen, Baumwolle, Gemüsepflanzen (z.B. Gurken, Bohnen und Kürbisgewächse), Gerste, Gras, Hafer, Kaffee, Kartoffeln, Mais, Obstpflanzen, Reis, Roggen, Soja, Tomaten, Wein, Weizen, Zierpflanzen, Zuckerrohr und einer Vielzahl von Samen.

Vorteilhaft eignen sie sich zur Bekämpfung der folgenden pflanzenpathogenen Pilze: Blumeria graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zuckerrohr, Venturia inaequalis an Äpfeln, Bipolaris- und Drechslera-Arten an Getreide, Reis und Rasen, Septoria-Arten an Weizen, Botrytis cinerea an Erdbeeren, Gemüse, Zierpflanzen und Reben, Mycosphaerella-Arten an Bananen, Erdnüssen und Getreide, Pseudocercosporella herpotrichoides an Weizen und Gerste, Pyricularia oryzae an Reis, Phakopsora-Arten an Soja, Phytophthora infestans an Kartoffeln und Tomaten, Pseudoperonospora-Arten an Kürbisgewächsen und Hopfen, Plasmopara viticola an Reben, Alternaria-Arten an Gemüse und Obst sowie Fusarium- und Verticillium-Arten.

Insbesondere sind sie zur Bekämpfung von Schadpilzen aus der Klasse der Oomyceten geeignet.

Die Verbindungen I und Wirkstoffe aus der Gruppe I) können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

In den für Formeln I bis IV angegebenen Definitionen der Symbole wurden Sammelbegriffe verwendet, die für die folgenden Substituenten stehen:

Halogen: Fluor, Chlor, Brom und Jod;

Alkyl: gesättigte, geradkettige oder verzweigte Kohlenwasserstoffreste mit 1 bis 4 Kohlenstoffatomen, z.B. $C_1$-$C_4$-Alkyl wie Methyl, Ethyl, Propyl, 1-Methylethyl, Butyl, 1-Methyl-propyl, 2-Methylpropyl, 1,1-Dimethylethyl;

Halogenalkyl: geradkettige oder verzweigte Alkylgruppen mit 1 oder 2 Kohlenstoffatomen (wie vorstehend genannt), wobei in diesen Gruppen teilweise oder vollständig die Wasserstoffatome durch Halogenatome wie vorstehend genannt ersetzt sein können: insbesondere $C_1$-$C_2$-Halogenalkyl wie Chlormethyl, Brommethyl, Dichlormethyl, Trichlormethyl, Fluormethyl, Difluormethyl, Trifluormethyl, Chlorfluormethyl, Dichlorfluormethyl, Chlordifluormethyl, 1-Chlorethyl, 1-Bromethyl, 1-Fluorethyl, 2-Fluorethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl, Pentafluorethyl oder 1,1,1-Trifluorprop-2-yl.

Die Formel I repräsentiert insbesondere Verbindungen, in denen der Index n 0, 1 oder 2, bevorzugt 0 oder 1 bedeutet.

Daneben sind auch Verbindungen I bevorzugt, in denen $R^1$ Wasserstoff, Methyl, Ethyl, n-, oder iso-Propyl, Fluor, Chlor, Brom, Iod, Methylthio, Ethylthio, Trifluormethyl, Pentafluorethyl, Cyano, Phenyl oder Formyl, besonders Wasserstoff, Brom oder Methyl, insbesondere Methyl bedeutet.

Gleichermaßen bevorzugt sind Verbindungen I, in denen $R^2$ Wasserstoff, Fluor, Chlor, Brom, Iod, Methyl, Trifluormethyl, Methoxycarbonyl, Ethoxycarbonyl, n-Propoxycarbonyl, Isopropoxycarbonyl oder n-Butoxycarbonyl, besonders Chlor, Brom, Methoxycarbonyl, n-Propoxycarbonyl oder n-Butoxycarbonyl, insbesondere Brom bedeutet.

Die Gruppe $R^3$ steht bevorzugt in 5- und/oder 6-Position. Diese Verbindungen sind zur Verwendung in den erfindungsgemäßen Mischungen besonders geeignet.

Weiterhin bevorzugt sind Verbindungen I, in denen $R^3$ Fluor, Chlor, Brom, Iod, Cyano, Nitro, Methyl, Ethyl, Methoxy, Trifluormethyl, besonders Fluor, Chlor, Brom, Cyano, Methyl, Trifluormethyl oder Methoxy, insbesondere Fluor bedeutet.

Insbesondere sind im Hinblick auf ihre Verwendung in den erfindungsgemäßen Mischungen die in den folgenden Tabellen zusammengestellten Verbindungen II bevorzugt.

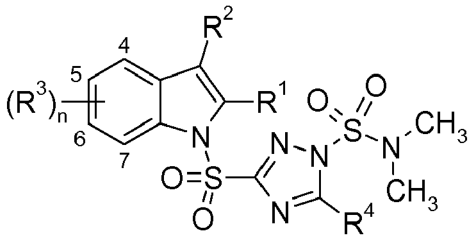

I

Tabelle 7

Verbindungen der Formel I, in denen n 1, $R^3$ 6-Fluor und $R^4$ Wasserstoff bedeutet und die Kombination von $R^1$ und $R^2$ für eine Verbindung jeweils einer Zeile der Tabelle I entspricht

Tabelle I

| Nr. | $R^1$ | $R^2$ |
|---|---|---|
| I-62 | $CH_3$ | Br |

Insbesondere bevorzugt ist die Verbindung 3-(3-Brom-6-fluor-2-methyl-indol-1-sulfonyl)-[1,2,4]triazol-1-sulfonsäuredimethylamid (Verbindung IA).

In einer bevorzugten Ausgestaltung der Erfindung liegen Mischungen einer Verbindung I mit der Verbindung der Formel II vor.

Eine weitere bevorzugte Ausführung der erfindungsgemäßen Mischungen betrifft die Kombination einer der vorgenannten Verbindungen der Formel I und heterocylische Verbindungen wie Dithianon, Picobenzamid, Thiophanatmethyl oder Triforine.

Bevorzugt setzt man bei der Bereitstellung der Mischungen die reinen Wirkstoffe ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel als weitere Aktivkomponenten beimischen kann.

Üblicherweise kommen Mischungen der Verbindung I mit einem Wirkstoff aus der Gruppe I) zur Anwendung. Unter Umständen können jedoch Mischungen der Verbindung I mit zwei oder ggf. mehreren Aktivkomponenten vorteilhaft sein.

Als weitere Aktivkomponenten im voranstehenden Sinne kommen besonders die Wirkstoffe aus den Gruppen A) bis O)

A) Azole wie Cyproconazol, Difenoconazole, Enilconazol, Epoxiconazol, Fluquiconazol, Flusilazol, Hexaconazol, Imazalil, Metconazol, Myclobutanil, Penconazol, Prochloraz, Prothioconazol, Tebuconazol, Triadimefon, Triadimenol, Triflumizol;

B) Strobilurine wie Azoxystrobin, Dimoxystrobin, Enestroburin, Fluoxastrobin, Kresoxim-methyl, Metominostrobin, Orysastrobin, Picoxystrobin, Pyraclostrobin oder Trifloxystrobin;

C) Acylalanine wie Benalaxyl, Metalaxyl, Mefenoxam, Ofurace, Oxadixyl;

D) Aminderivate wie Spiroxamin;

E) Anilinopyrimidine wie Pyrimethanil, Mepanipyrim oder Cyprodinil;

F) Dicarboximide wie Iprodion, Procymidon, Vinclozolin;

G) Zimtsäureamide und Analoge wie Dimethomorph, Flumetover oder Flumorph;

H) Dithiocarbamate wie Ferbam, Nabam, Maneb, Metam, Metiram, Propineb, Polycarbamat, Thiram, Ziram, Zineb;

I) Heterocylische Verbindungen wie Benomyl, Boscalid, Carbendazim, Dithianon, Famoxadon, Fenamidon, Penthiopyrad, Picobenzamid, Proquinazid, Quinoxyfen, Thiophanat-methyl, Triforine oder 5-Chlor-7-(4-methyl-piperidin-1-yl)-6-(2,4,6-trifluor-phenyl)-[1,2,4]triazolo[1,5-a]pyrimidin der Formel II,

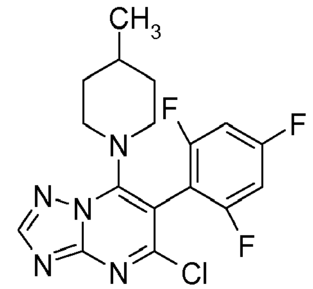

II

K) Schwefel und Kupferfungizide wie Bordeaux Brühe, Kupferacetat, Kupferoxychlorid, basisches Kupfersulfat;

L) Nitrophenylderivate, wie Dinocap;

M) Phenylpyrrole wie Fenpiclonil oder Fludioxonil;

N) Sulfensäurederivate wie Captafol, Dichlofluanid, Tolylfluanid;

O) Sonstige Fungizide wie Benthiavalicarb, Chlorothalonil, Cyflufenamid, Diclofluanid, Diethofencarb, Ethaboxam, Fenhexamid, Fluazinam, Iprovalicarb, Metrafenon, Zoxamid;
Oximetherderivate der Formel III,

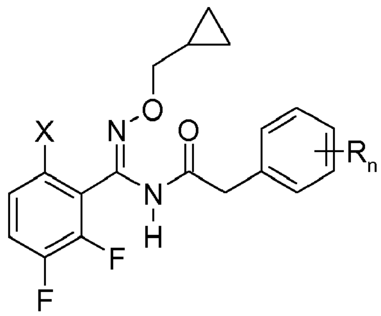

III

in der

X $C_1$-$C_4$-Halogenalkoxy,
n 0, 1, 2 oder 3,
R Halogen, $C_1$-$C_4$-Alkyl, $C_1$-$C_4$-Halogenalkyl, $C_1$-$C_4$-Alkoxy, oder Halogenalkoxy bedeuten; und

Verbindungen der Formel IV,

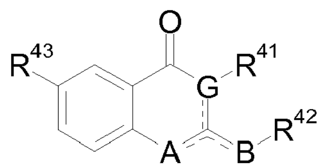

IV

in der die Variablen folgende Bedeutung haben:

A O oder N;
B N oder eine direkte Bindung;

G C oder N;
$R^{41}$ $C_1$-$C_4$-Alkyl;
$R^{42}$ $C_1$-$C_4$-Alkoxy; und
$R^{43}$ Halogen;

und insbesondere die hier genannten bevorzugten Wirkstoffe in Frage:

Strobilurine wie Azoxystrobin, Fluoxastrobin, Picoxystrobin, Pyraclostrobin oder Trifloxystrobin;
Acylalanine wie Benalaxyl, Metalaxyl, Mefenoxam, Ofurace oder Oxadixyl;
Zimtsäureamide und Analoge wie Dimethomorph, Flumetover oder Flumorph;
heterocylische Verbindungen wie Dithianon, Picobenzamid, Thiophanat-methyl oder Triforine;
Schwefel oder Kupferfungizide wie Bordeaux Brühe, Kupferacetat, Kupferoxychlorid, basisches Kupfersulfat;
ein Wirkstoff aus Captafol, Dichlofluanid, Tolylfluanid, Benthiavalicarb, Chlorothalonil, Cyflufenamid, Diclofluanid, Diethofencarb, Ethaboxam, Fenhexamid, Fluazinam, Iprovalicarb, Metrafenon und Zoxamid.

Die Verbindung I und der Wirkstoff aus der Gruppe I) werden üblicherweise in einem Gewichtsverhältnis von 100:1 bis 1:100, vorzugsweise 20:1 bis 1:20, insbesondere 10:1 bis 1:10 angewandt.
Die weiteren Aktivkomponenten werden gewünschtenfalls im Verhältnis von 20:1 bis 1:20 zu der Verbindung I zugemischt.
Die Aufwandmengen der erfindungsgemäßen Mischungen liegen je nach Art der Verbindung und des gewünschten Effekts bei 5 g/ha bis 2000 g/ha, vorzugsweise 50 bis 900 g/ha, insbesondere 50 bis 750 g/ha.
Die Aufwandmengen für die Verbindung I liegen entsprechend in der Regel bei 1 bis 1000 g/ha, vorzugsweise 10 bis 900 g/ha, insbesondere 20 bis 750 g/ha.
Die Aufwandmengen für den Wirkstoff aus den Gruppen A) bis O) liegen entsprechend in der Regel bei 1 bis 2000 g/ha, vorzugsweise 10 bis 900 g/ha, insbesondere 40 bis 500 g/ha.
Bei der Saatgutbehandlung werden im allgemeinen Aufwandmengen an Mischung von 1 bis 1000 g/100 kg Saatgut, vorzugsweise 1 bis 750 g/100 kg, insbesondere 5 bis 500 g/100 kg verwendet.
Das Verfahren zur Bekämpfung von Schadpilzen erfolgt durch die getrennte oder gemeinsame Applikation der Verbindung I und des Wirkstoffs aus der Gruppe I) oder der Mischungen aus der Verbindung I und des Wirkstoffs aus der Gruppe I) durch Besprühen oder Bestäuben der Samen, der Pflanzen oder der Böden vor oder nach der Aussaat der Pflanzen oder vor oder nach dem Auflaufen der Pflanzen.
Die erfindungsgemäßen Mischungen, bzw. die Verbindung I und der Wirkstoff aus der Gruppe I) können in die üblichen Formulierungen überführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung der erfindungsgemäßen Verbindung gewährleisten.
Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln. Als Lösungsmittel / Hilfsstoffe kommen dafür im wesentlichen in Betracht:

- Wasser, aromatische Lösungsmittel (z.B. Solvesso Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester. Grundsätzlich können auch Lösungsmittelgemische verwendet werden,
- Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie LigninSulfitablaugen und Methylcellulose.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose in Betracht.
Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.

Pulver-, Streu- und Stäubmittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen zwischen 0,01 und 95 Gew.-%, vorzugsweise zwischen 0,1 und 90 Gew.-% der Wirkstoffe. Die Wirkstoffe werden dabei in einer Reinheit von 90% bis 100%, vorzugsweise 95% bis 100% (nach NMR-Spektrum) eingesetzt.

Beispiele für Formulierungen sind: 1. Produkte zur Verdünnung in Wasser

A) Wasserlösliche Konzentrate (SL)

10 Gew.-Teile der Wirkstoffe werden in Wasser oder einem wasserlöslichen Lösungsmittel gelöst. Alternativ werden Netzmittel oder andere Hilfsmittel zugefügt. Bei der Verdünnung in Wasser löst sich der Wirkstoff.

B) Dispergierbare Konzentrate (DC)

20 Gew.-Teile der Wirkstoffe werden in Cyclohexanon unter Zusatz eines Dispergiermittels z.B. Polyvinylpyrrolidon gelöst. Bei Verdünnung in Wasser ergibt sich eine Dispersion.

C) Emulgierbare Konzentrate (EC)

15 Gew.-Teile der Wirkstoffe werden in Xylol unter Zusatz von Ca-Dodecylbenzolsulfonat und Ricinusölethoxylat (jeweils 5 %) gelöst. Bei der Verdünnung in Wasser ergibt sich eine Emulsion.

D) Emulsionen (EW, EO)

40 Gew.-Teile der Wirkstoffe werden in Xylol unter Zusatz von Ca-Dodecylbenzolsulfonat und Ricinusölethoxylat (jeweils 5 %) gelöst. Diese Mischung wird mittels einer Emulgiermaschine (Ultraturax) in Wasser eingebracht und zu einer homogenen Emulsion gebracht. Bei der Verdünnung in Wasser ergibt sich eine Emulsion.

E) Suspensionen (SC, OD)

20 Gew.-Teile der Wirkstoffe werden unter Zusatz von Dispergier- und Netzmitteln und Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs.

F) Wasserdispergierbare und wasserlösliche Granulate (WG, SG) 50 Gew.-Teile der Wirkstoffe werden unter Zusatz von Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs.

G) Wasserdispergierbare und wasserlösliche Pulver (WP, SP)

75 Gew.-Teile der Wirkstoffe werden unter Zusatz von Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs.

2. Produkte für die Direktapplikation

H) Stäube (DP)

5 Gew.Teile der Wirkstoffe werden fein gemahlen und mit 95 % feinteiligem Kaolin innig vermischt. Man erhält dadurch ein Stäubmittel.

I) Granulate (GR, FG, GG, MG)

0.5 Gew-Teile der Wirkstoffe werden fein gemahlen und mit 95.5 % Trägerstoffe verbunden. Gängige Verfahren sind dabei die Extrusion, die Sprühtrocknung oder die Wirbelschicht. Man erhält dadurch ein Granulat für die Direktapplikation.

J) ULV- Lösungen (UL)

10 Gew.-Teile der Wirkstoffe werden in einem organischen Lösungsmittel z.B. Xylol gelöst. Dadurch erhält man ein Produkt für die Direktapplikation.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1 %.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, Herbizide, Fungizide, andere Schädlingsbekämpfungsmittel, Bakterizide, gegebenenfalls auch erst unmittelbar vor der Anwendung (Tankmix), zugesetzt werden. Diese Mittel werden üblicherweise zu den erfindungsgemäßen Mitteln im Gewichtsverhältnis 1:10 bis 10: 1 zugemischt.

Die Verbindungen I und I), bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und I) bei getrennter Ausbringung, behandelt. Die Anwendung kann vor oder nach dem Befall durch die Schadpilze erfolgen.

Die fungizide Wirkung der Verbindung und der Mischungen lässt sich durch folgende Versuche zeigen:

Die Wirkstoffe wurden getrennt oder gemeinsam als eine Stammlösung aufbereitet mit 0,25 Gew.-% Wirkstoff in Aceton oder DMSO. Dieser Lösung wurde 1 Gew.-% Emulgator Uniperol® EL (Netzmittel mit Emulgier- und Dispergierwirkung auf der Basis ethoxylierter Alkylphenole) zugesetzt und entsprechend der gewünschten Konzentration mit Wasser verdünnt.

Die visuell ermittelten Werte für den Prozentanteil befallener Blattflächen wurden in Wirkungsgrade als % der unbehandelten Kontrolle umgerechnet:

Der Wirkungsgrad (W) wird nach der Formel von Abbot wie folgt berechnet:

$$W = (1 - \alpha/\beta) \cdot 100$$

$\alpha$ entspricht dem Pilzbefall der behandelten Pflanzen in % und
$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Anwendungsbeispiel 1 - Aktivität gegen die Krautfäule an Tomaten verursacht durch Phytophthora infestans bei protektiver Behandlung

Blätter von getopften Tomatenpflanzen wurden mit einer wässriger Suspension in der unten angegebenen Wirkstoffkonzentration bis zur Tropfnässe besprüht. Am folgenden Tag wurden die Blätter mit einer wässrigen Sporangienaufschwemmung von Phytophthora infestans infiziert. Anschließend wurden die Pflanzen in einer wasserdampfgesättigten Kammer bei Temperaturen zwischen 18 und 20°C aufgestellt. Nach 6 Tagen hatte sich die Krautfäule auf den unbehandelten, jedoch infizierten Kontrollpflanzen so stark entwickelt, dass der Befall visuell in % ermittelt werden konnte.

Tabelle A - Einzelwirkstoffe

| Beispiel | Wirkstoff / Mischungsverhältnis | Wirkstoffkonzentration in der Spritzbrühe [ppm] | Wirkungsgrad in % der unbehandelten Kontrolle |
|---|---|---|---|
| 1 | Kontrolle (unbehandelt) | - | (90 % Befall) |
| 2 | I-62, Tab.7 (IA) | 1 | 56 |
| 3 | II | 4<br>1<br>0,25 | 0<br>0<br>0 |

Tabelle B - erfindungsgemäße Mischungen

| Beispiel | Wirkstoffmischung Konzentration Mischungsverhältnis | beobachteter Wirkungsgrad | berechneter Wirkungsgrad*) |
|---|---|---|---|
| 4 | IA + II<br>1 + 4 ppm<br>1:4 | 89 | 56 |
| 5 | IA + II<br>1 + 1 ppm<br>1:1 | 78 | 56 |
| 6 | IA + II<br>1 + 0,25 ppm<br>4:1 | 67 | 56 |
| *) berechneter Wirkungsgrad nach der Colby-Formel | | | |

Aus den Ergebnissen der Versuche geht hervor, dass die erfindungsgemäßen Mischungen aufgrund des starken Synergismus erheblich besser wirksam sind, als nach der Colby-Formel vorausberechnet.

## Patentansprüche

**1.** Fungizide Mischungen, enthaltend als aktive Komponenten

1) eine Sulfamoylverbindung der Formel I,

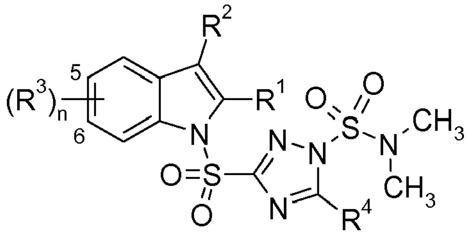

I

in der die Substituenten folgende Bedeutung haben:

$R^1$ Wasserstoff, Halogen, Cyano, $C_1$-$C_4$-Alkyl, $C_1$-$C_2$-Halogenalkyl, $C_1$-$C_4$-Alkoxy, $C_1$-$C_4$-Alkylthio, $C_1$-$C_4$-Alkoxycarbonyl, Phenyl, Benzyl, Formyl oder CH=NOA;
A Wasserstoff, $C_1$-$C_4$-Alkyl, $C_1$-$C_4$-Alkylcarbonyl;
$R^2$ Wasserstoff, Halogen, Cyano, $C_1$-$C_4$-Alkyl, $C_1$-$C_2$-Halogenalkyl, $C_1$-$C_6$-Alkoxycarbonyl;
$R^3$ Halogen, Cyano, Nitro, $C_1$-$C_4$-Alkyl, $C_1$-$C_2$-Halogenalkyl, $C_1$-$C_4$-Alkoxy, $C_1$-$C_4$-Alkylthio, $C_1$-$C_4$-Alkoxycarbonyl, Formyl oder CH=NOA;
n 0, 1, 2, 3 oder 4;
$R^4$ Wasserstoff, Halogen, Cyano, $C_1$-$C_4$-Alkyl oder $C_1$-$C_2$-Halogenalkyl;

und
2) mindestens einen Wirkstoff ausgewählt aus der Gruppe:

I) Heterocylische Verbindungen wie Benomyl, Boscalid, Carbendazim, Dithianon, Famoxadon, Fenamidon, Penthiopyrad, Picobenzamid, Proquinazid, Quinoxyfen, Thiophanat-methyl, Triforine, 5-Chlor-7-(4-methyl-piperidin-1-yl)-6-(2,4,6-trifluor-phenyl)-[1,2,4]triazolo[1,5-a]pyrimidin der Formel II,

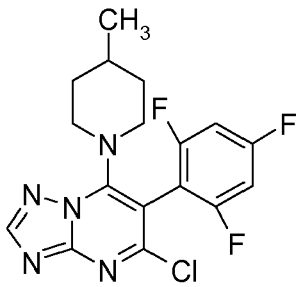

II

in einer synergistisch wirksamen Menge.

**2.** Fungizide Mischungen gemäß Anspruch 1, enthaltend als Verbindung der Formel I 3-(3-Brom-6-fluor-2-methyl-indol-1-sulfonyl)-[1,2,4]triazol-1-sulfonsäuredimethylamid der Formel IA

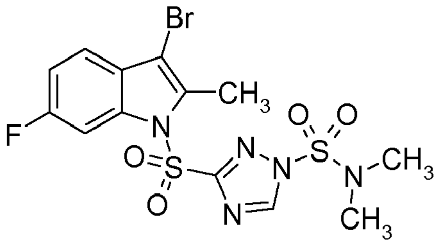

IA

.

3. Fungizide Mischungen gemäß Anspruch 1 oder 2, enthaltend eine Verbindung der Formel I und Dithianon, Picobenzamid, Thiophanat-methyl oder Triforine.

4. Fungizide Mischungen gemäß einem der Ansprüche 1 bis 3, enthaltend einen weiteren Wirkstoff aus den Gruppen A) bis O).

5. Fungizide Mischungen gemäß einem der Ansprüche 1 bis 3, enthaltend eine Verbindung der Formel I und einen Wirkstoff aus der Gruppe I) in einem Gewichtsverhältnis von 100:1 bis 1:100.

6. Mittel, enthaltend einen flüssigen oder festen Trägerstoff und eine Mischung gemäß einem der Ansprüche 1 bis 5.

7. Verfahren zur Bekämpfung von Schadpilzen, **dadurch gekennzeichnet, dass** man die Pilze, deren Lebensraum oder die vor Pilzbefall zu schützenden Pflanzen, den Boden oder Saatgüter mit einer synergistisch wirksamen Menge einer Verbindung I und eines Wirkstoffs aus der Gruppe I) gemäß Anspruch 1 behandelt.

8. Verfahren nach Anspruch 7, **dadurch gekennzeichnet, dass** man eine Verbindung I und die Wirkstoffe aus der Gruppe I) gemäß Anspruch 1 gleichzeitig, und zwar gemeinsam oder getrennt, oder nacheinander ausbringt.

9. Verfahren nach Anspruch 7, **dadurch gekennzeichnet, dass** man die Mischungen gemäß einem der Ansprüche 1 bis 5 auf die vor Pilzbefall zu schützenden Pflanzen oder den Boden in einer Menge von 5 g/ha bis 2000 g/ha aufwendet.

10. Verfahren nach Ansprüchen 7 und 8, **dadurch gekennzeichnet, dass** man die Mischungen gemäß einem der Ansprüche 1 bis 5 in einer Menge von 1 bis 1000 g/100 kg Saatgut anwendet.

11. Verfahren nach Ansprüchen 7 bis 10, **dadurch gekennzeichnet, dass** Schadpilze aus der Klasse der *Oomyceten* bekämpft werden.

12. Saatgut, enthaltend die Mischungen gemäß einem der Ansprüche 1 bis 5 in einer Menge von 1 bis 1000 g/100 kg.

13. Verwendung einer Verbindung I und einem Wirkstoff aus der Gruppe I) gemäß Anspruch 1 zur Herstellung eines zur Bekämpfung von Schadpilzen geeigneten Mittels.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1031571 A
- JP 2001192381 A
- WO 03053145 A
- US 4664696 A
- GB 2098607 A
- EP 196038 A
- GB 857383 A
- US 3991071 A
- WO 9616048 A
- EP 40345 A
- BE 793867
- DE 2324010
- JP 54119462 A
- EP 382375 A
- EP 477631 A
- EP 936213 A
- WO 9727189 A
- EP 253213 A
- EP 398692 A
- WO 9715552 A
- EP 278595 A
- WO 9601256 A
- EP 460575 A
- DE 2903612
- GB 1500581 A
- GB 2058059 A
- EP 281842 A
- DD 151404 A
- EP 224339 A
- EP 310550 A
- GB 1312536 A
- US 3903090 A
- DE OS2207576 A
- EP 120321 A
- EP 860438 A
- US 1972961 A
- US 2317765 A
- US 2504404 A
- US 2791605 A
- US 3248400 A
- BE 611960
- DE 642532
- US 2457674 A
- US 3631176 A
- EP 545099 A
- US 3657443 A
- JP 10130268 B
- WO 9942447 A
- WO 9748684 A
- US 5240940 A
- DE OS1930540 A
- DE 1901421
- WO 9846607 A
- US 2526660 A
- DE 1193498
- JP 9323984 A
- US 3290353 A
- WO 9619442 A
- EP 78663 A
- EP 639574 A
- EP 472996 A
- WO 0187822 A
- US 5945567 A
- WO 9914188 A
- WO 9748648 A
- WO 02094797 A
- WO 0314103 A


### In der Beschreibung aufgeführte Nicht-Patentliteratur


- *Fruits,* 1973, vol. 28, 545
- *Proc. Br. Crop Prot. Conf.-Pests Dis.,* 1992, vol. 5-3, 411
- *Proc.Br. Crop Prot. Conf.-Pests Dis.,* 1984, vol. 1, 413
- *AGROW,* 1995, 22
- *Proc. 1988 Br. Crop Prot. Conf. - Pests Dis.,* 1988, vol. 1, 65
- The Pecticide Manual. British Crop Protection Council, 1995, 482
- *Phytopathology,* 1962, vol. 52, 754
- *Proc. Br. Crop Prot. Conf. - Pests Dis.,* 1998, vol. 2, 327
- Pecticide Manual. British Crop Protection Council, 1995, 474
- **Colby, S. R.** Calculating synergistic and antagonistic responses of herbicide Combinations. *Weeds,* 1967, vol. 15, 20-22